# EUROPEAN PATENT APPLICATION

(11) **EP 1 612 461 A1**
(43) Date of publication of application: **04.01.2006**
(21) Application number: 05001369.7
(22) Date of filing: 25.01.2005
(51) Int. Cl.: F16J 15/32

(54) **Sector shaft pressure seal**

(30) Priority: 28.06.2004 US 878896
(71) Applicant: Carl Freudenberg, 69469 Weinheim (DE)
(72) Inventor: Laplante, Robert Paul, Gilford, New Hampshire 03249 (US); Labreque, Jeffrey Paul, Hookset, New Hampshire 03106 (US)

(57) **Abstract**

A seal assembly adapted to frictionally engage an annular groove formed in a bore and independently maintain its non-rotational motion in the bore. The seal assembly comprises an annular sealing member and an annular support member that are mechanically engaged. The sealing member includes a heel portion having a generally L-shaped cross-section and a sealing portion having a generally V-shaped cross-section defining an outer lip. The heel portion and the outer lip are adapted to frictionally engage the annular groove to limit rotation of the seal assembly therein. The annular support member has a generally inverted L-shaped cross-section and is mechanically interconnected with the heel portion of the sealing member. The support member is adapted to support and prevent extrusion of the sealing member between the bore and shaft. The support member is constructed of material that is substantially less deformable than the sealing member.

## Description

### FIELD OF THE INVENTION

The present invention relates to a radial shaft seal, and more particularly to a composite radial shaft seal having a sealing member adapted to frictionally maintain non-rotational motion of the seal.

### BACKGROUND OF THE INVENTION

Hydraulic systems often include a shaft and bore assembly adapted for relative rotational or axial displacement. Seals are implemented to contain fluid from one media type to another. Typically, these hydraulic seals are annular shaped and are provided between the bore and shaft. An annular groove formed in the bore holds the seal. Typical seals are constructed of rubber or other flexible, oil resistant material. To seal higher pressures, backup rings are used to prevent extrusion. One means of preventing extrusion has been to use composite seals. Composite seals include a soft rubber sealing portion and a harder structural base portion. The base portion functions to support the seal under high pressures and its inherent rigidity resist the aforementioned extrusion.

### SUMMARY OF THE INVENTION

The present invention provides a hydraulic seal assembly that is adapted to frictionally engage an annular groove formed in a bore, thereby maintaining its rotational disposition. The seal assembly comprises an annular sealing member mechanically engaged with an annular support member. The sealing member includes a heel portion having a generally L-shaped cross-section and a sealing portion having a generally V-shaped cross-section. The heel portion and the outer lip are adapted to frictionally engage the annular groove to limit rotation of the seal assembly therein. The annular support member has a generally upside-down L-shaped cross-section and is mechanically interconnected with the heel portion of the sealing member. The support member is adapted to support the sealing member under axial and rotational loading conditions. The support member typically is constructed of a material that has a higher modulus than the sealing member to resist deformation.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 is a cut-out perspective view of a seal assembly in accordance with the present invention;

Figure 2 is an exploded cross-sectional view of the seal assembly of Figure 1;

Figure 3 is a partial cross-sectional view of the seal assembly of Figure 1; and

Figure 4 is a cross-sectional view of an alternative embodiment of a seal assembly in accordance with the present invention.

### DETAILED DESCRIPTION OF THE PREFERRED EMBODIMENTS

The following description of the preferred embodiment is merely exemplary in nature and is in no way intended to limit the scope of the invention, its application, or its uses.

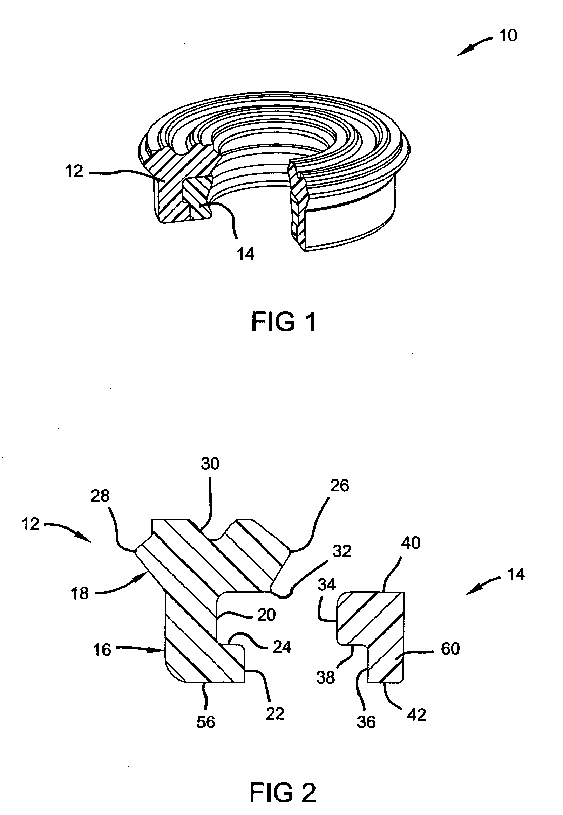

With reference to Figures 1 and 2, a seal assembly 10 in accordance with the present invention is described. The seal assembly 10 includes an annular sealing member 12 and an annular support member 14.

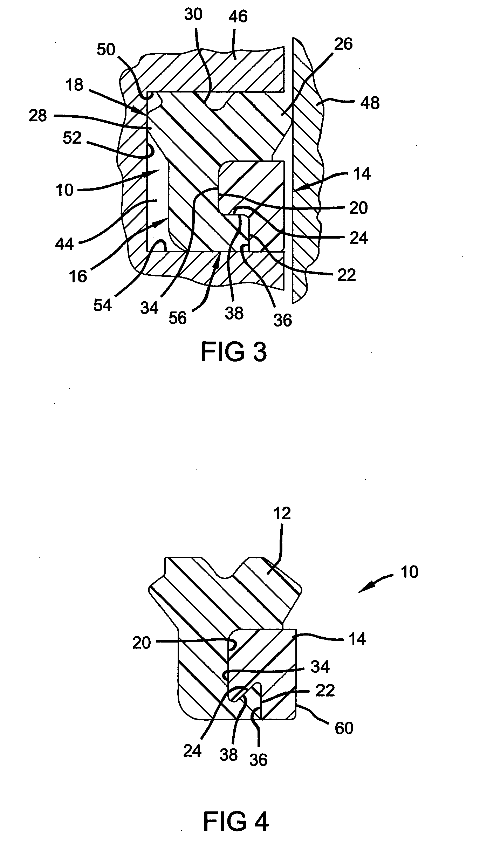

The sealing member 12 is a one-piece member that includes a heel portion 16 and a static sealing portion 18. According to a first embodiment, the heel portion 16 has a generally L-shaped cross-section that defines a first axially extending leg surface 20, a second leg surface 22, a table surface 24, and a radially extending sole surface 56. The first and second leg surfaces 20, 22 are substantially parallel and the table surface 24 extends generally perpendicular (Fig. 2) or angular (Fig. 4) therebetween.

The sealing portion 18 of the sealing member 12 is axially disposed relative to the heel portion 16 and has a generally V-shaped cross-section. The sealing portion 18 defines an inner lip 26, an outer lip 28, and an annular groove 30 disposed on an axial face of the sealing portion 18. The annular groove 30 is adapted to enhance radial deformation of the sealing member 12 by allowing the sealing portion 18 to flex. The sealing portion 18 further defines a radially converging surface 32 extending from the inner lip 26 toward the heel portion 16. In an exemplary embodiment, the sealing member 12 is constructed of a deformable, material such as an elastomer. Preferably, an oil resistant material such as nitrile rubber or hydrogenated nitrile rubber can be used. By way of example, it is envisioned that the sealing member 12 has a Shore A durometer hardness of approximately 60-90. It should be appreciated, however, that any flexible, oil resistant material capable of providing a hydraulic seal is intended to be within the scope of the present invention.

The support member 14 has a generally inverted L-shaped cross-section that defines a first outer engaging surface 34, a second radially inward outer engaging surface 36, a lower engaging surface 38 extending radially inward from the first outer engaging surface 34 toward the second outer engaging surface 36, first and second radially extending support surfaces 40, 42, and an inner diameter surface 60. The first and second outer engaging surfaces 34, 36 are virtually parallel to one another and the lower engaging surface 38 extends generally perpendicular (Fig. 2) or angular (Fig. 4) therebetween. The first support surface 40 is adapted to support the radially converging surface 32 of the sealing member 12 under axial and/or radial loading. In an exemplary embodiment, the support member 14 is constructed of a material that has a higher modulus material (such as polyurethane) than sealing member 12. By way of example, it is envisioned that the support member 14 has a Shore A durometer hardness of approximately 60-100. It should be appreciated, however, that any material stiffer than the sealing member 12 and capable of supporting the sealing member 12 under axial and/or radial loading is intended to be within the scope of the present invention.

With reference now to Figures 2 and 3, the support member 14 is mechanically engaged with the heel portion 16 and static sealing portion 18 of the sealing member 12. The first leg surface 20 is radially engaged with the first outer engaging surface 34. The second leg surface 22 is radially engaged with the second outer engaging surface 36. A mechanical lock created by the above-described radial engagement limits relative rotational displacement of the sealing and support members 12, 14. The table surface 24 is axially engaged with the lower engaging surface 38. This engagement provides axial support to the sealing member 12 relative to the support member 14.

With further reference to Figure 3, the seal assembly 10 is installed in an annular groove 44 that is formed in a bore 46 that contains a shaft 48. The annular groove 44 includes a top wall 50, a side wall 52, and a bottom wall 54. The seal assembly 10 is disposed in the groove 44 such that the sole surface 56 of the heel portion 16 and the second support surface 42 of the support member 14 frictionally engage the bottom wall 54 of the bore 44. Furthermore, the outer lip 28 engages with sidewall 52 and the inner lip 26 engages with the shaft 48, respectively, thereby providing a fluid tight seal. Friction created by the engagement between the outer lip 28 and heel portion 16 of the sealing member 12 and the annular groove 44 substantially limits rotational displacement of the seal assembly 10.

With reference now to Figure 4, an alternative exemplary embodiment of the present invention is described. All aspects of the alternative embodiment of the seal assembly 10 are identical to that described above with the exception of the interface between the sealing and the support members 12, 14.

The first and second leg surfaces 20, 22 remain parallel, as well as the first and second outer engaging surfaces 34, 36. The table surface 24 and the lower engaging surface 38, however, extend at angles relative to the leg surfaces 20, 22 and outer engaging surfaces 34, 36, respectively. The table surface 24, however, extends angularly radially upward and inward from the first leg surface 20 to the second leg surface 22. The lower engaging surface 38 extends angularly radially upward and inward from the first outer engaging surface 34 to the second outer engaging surface 36. Cooperative engagement of the table surface 24 and the lower engaging surface 38 limits radial separation of the sealing member 12 and the support member 14. In an exemplary embodiment, the table surface 24 and the lower engaging surface 38 engage in a plane extending at approximately 45° from the first leg surface 20. It should be appreciated, however, that any angle capable of limiting radial separation of the sealing and support members 12, 14 is intended to be within the scope of the present invention.

The description of the invention is merely exemplary in nature and, thus, variations that do not depart from the gist of the invention are intended to be within the scope of the invention. Such variations are not to be regarded as a departure from the spirit and scope of the invention.

## Claims

1. A seal assembly, comprising: an annular sealing member including a heel portion and a sealing portion, each adapted to frictionally engage an annular groove to limit rotation of the seal assembly therein; and an annular support member interconnected with said heel portion and adapted to support said sealing member; wherein said support member is constructed of material that is substantially less deformable than said sealing member.

2. The seal assembly of claim 1 wherein said heel portion has a generally L-shaped cross-section and said annular support member has a generally inverted L-shaped cross-section.

3. The seal assembly of claim 1 wherein said sealing portion defines an outer lip for engaging the annular groove and an inner lip for engaging a shaft.

4. The seal assembly of claim 3 wherein said sealing portion has a generally V-shaped cross-section.

5. The seal assembly of claim 3 wherein said sealing portion of said sealing member further includes an annular groove formed between said inner and outer lips to enhance radial deformation of said sealing portion.

6. The seal assembly of claim 3 wherein said sealing portion of said sealing member includes a radially converging surface extending from said inner lip to said heel portion and said support member includes a support surface adapted to support said radially converging surface.

7. The seal assembly of claim 1, wherein said support member further includes an annular groove formed on an inner side wall.

8. The seal assembly of claim 1, wherein said sealing member is constructed of an elastomeric material.

9. The seal assembly of claim 1 wherein said support member is constructed of a material with a higher modulus than said sealing member.

10. A seal assembly, comprising: an annular sealing member including a heel portion and an outer lip, said heel portion and said outer lip each adapted to frictionally engage an annular groove to limit rotation of the seal assembly therein; said heel portion of said sealing member including a channel formed on an inner side wall; and an annular support member including an annulus formed on an outer side wall mechanically engaged with said channel to interconnect said sealing member with said support member; said support member constructed of a material substantially less deformable than said sealing member.

11. The seal assembly of claim 10 wherein said sealing member further includes an inner lip adapted to sealingly engage a shaft.

12. The seal assembly of claim 11 wherein said sealing member further includes an annular groove formed between said inner and outer lips to enhance radial deformation of said sealing member.

13. The seal assembly of claim 11 wherein said sealing member includes a radially converging surface extending from said first lip to said heel portion and said support member includes a support surface adapted to support said radially converging surface.

14. The seal assembly of claim 10 wherein said support member further includes an annular groove formed on an inner side wall.

15. The seal assembly of claim 10 wherein said sealing member is constructed of an elastomeric type material.

16. The seal assembly of claim 10 wherein said support member is constructed of polyurethane or similar type material with modulus greater than said sealing member.
